# FASCICULE DE BREVET EUROPEEN

(11) **EP 3 874 172 B1**
(45) Date de publication et mention de la délivrance du brevet: **21.02.2024**
(21) Numéro de dépôt: 19798045.1
(22) Date de dépôt: 31.10.2019
(51) Int. Cl.: F16B 5/06, F16B 21/07, B60R 13/02

(54) **ATTACHE ET ENSEMBLE DE FIXATION COMPRENANT UNE TELLE ATTACHE**
BEFESTIGUNGSELEMENT UND BEFESTIGUNGSANORDNUNG MIT EINEM SOLCHEN BEFESTIGUNGSELEMENT
FASTENER AND ATTACHMENT ASSEMBLY COMPRISING SUCH A FASTENER

(30) Priorité: 31.10.2018 FR 1860082
(43) Date de publication de la demande: 08.09.2021
(73) Titulaire: Faurecia Intérieur Industrie, 92000 Nanterre (FR)
(72) Inventeur: DUCHET, Dominique, 60730 CAUVIGNY (FR)
(74) Mandataire: Lavoix
(86) Numéro de dépôt international: PCT/EP2019/079815
(87) Numéro de publication internationale: WO 2020/089389

(56) Documents cités:
- FR-A1- 3 028 577
- JP-A- H08 121 441

## Description

La présente invention concerne le domaine des ensembles de fixation par encliquetage.

FR3028577A1 et JPH08121441A divulguent chacun une attache configurée pour s'encliqueter dans une fenêtre d'une première pièce de fixation et pour recevoir à encliquetage une patte de fixation d'une deuxième pièce de fixation.

En cours d'utilisation, de telles attaches sont conditionnées en vrac dans un contenant, et un opérateur saisit une attache pour encliqueter l'attache sur la première pièce de fixation puis pour encliqueter la deuxième pièce de fixation sur l'attache.

Il a été constaté que ces attaches conditionnées en vrac s'entremêlent facilement et sont difficiles à séparer rapidement, et que lorsqu'un opérateur devant assurer une certaine cadence d'assemblage saisit une attache entremêlée avec une ou plusieurs autre(s) attache(s), l'opérateur a tendance à mettre ces attaches au rebus et à prendre une nouvelle attache.

Il s'ensuit que des attaches sont mises au rebus alors que ces attaches sont fonctionnelles, ce qui augmente inutilement le coût de production et les rebus à traiter.

Un des buts de l'invention est de proposer une attache dont l'utilisation soit facilitée.

A cet effet, l'invention concerne une attache selon la revendication 1.

Il a été constaté que les attaches s'entremêlent notamment par insertion d'une portion distale d'une branche d'une attache entre les languettes d'une autre attache, en particulier lorsque deux attaches sont retournées l'une par rapport à l'autre avec une inclinaison entre leurs plans médians respectifs, de sorte que la branche d'une des deux attaches s'insère entre les deux languettes de l'autre attache.

La conception de l'attache pour que dans un tel cas l'autre branche de l'attache considérée vienne sensiblement en contact avec la portion distale d'une branche de ladite autre attache permet de générer un effort supplémentaire s'opposant à l'insertion de la branche de l'attache considérée entre les languettes de ladite autre attache.

Il en résulte que le risque que les deux attaches s'entremêlent est limité et que la saisie d'une attache dans un contenant recevant les attaches en vrac est facilitée.

Des caractéristiques optionnelles sont définies aux revendications 2 à 11.

L'invention concerne en outre un ensemble de fixation selon la revendication 12.

L'invention et ses avantages seront mieux compris à la lecture de la description qui va suivre, donnée uniquement à titre d'exemple nullement limitatif, et faite en référence aux dessins annexés, sur lesquels :
- la Figure 1 est une vue en coupe d'un ensemble comprenant une première pièce et une deuxième pièce fixées l'une sur l'autre par l'intermédiaire d'un dispositif de fixation comprenant une attache ;
- la Figure 2 est une vue en perspective de l'attache ;
- la Figure 3 est une vue de profil de l'attache ;
- la Figure 4 représente deux attaches identiques à celle des Figures 2 et 3 en vue de profil, les attaches étant retournées l'une par rapport à l'autre et une branche d'une attache étant insérée entre les branches de l'autre attache.

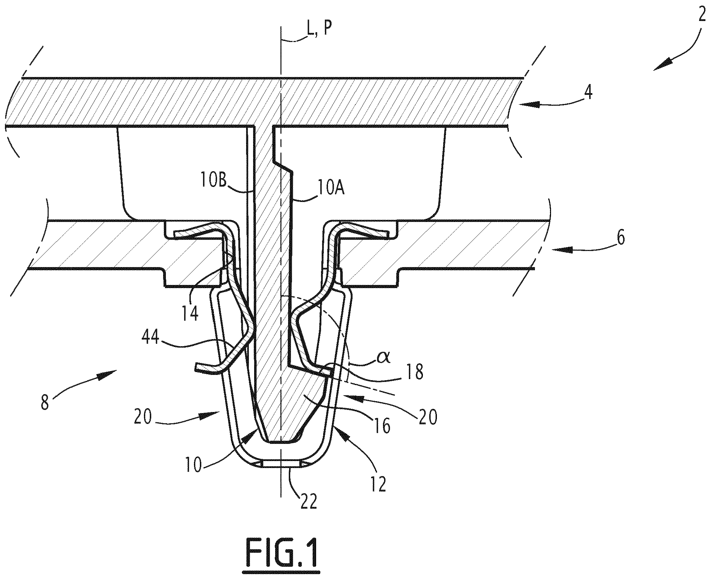

L'ensemble 2 illustré sur la Figure 1 comprend une première pièce 4 et une deuxième pièce 6 fixées l'une sur l'autre à l'aide d'un dispositif de fixation par encliquetage 8.

La première pièce 4 et la deuxième pièce 6 sont par exemple des pièces de véhicule, en particulier des pièces d'habillage de véhicule. Le véhicule est de préférence un véhicule automobile.

Dans un mode de réalisation, la première pièce 4 est un insert décoratif et la deuxième pièce 6 est un habillage de véhicule, par exemple une planche de bord, un panneau de porte, un ciel de pavillon...

Le dispositif de fixation par encliquetage 8 comprend une patte de fixation 10 et une attache 12, la patte de fixation 10 étant prévue pour se fixer sur l'attache 12 par encliquetage.

La patte de fixation 10 est fixée sur la première pièce 4 et l'attache 12 est configurée pour être fixée sur la deuxième pièce 6.

La patte de fixation 10 s'étend en saillie de la première pièce 4. La patte de fixation 10 est par exemple formée d'une seule pièce de matière avec la première pièce 4, en particulier en une seule pièce de matière plastique.

Dans un mode de réalisation, la première pièce 4 est réalisée par moulage (par exemple moulage par compression ou moulage par injection), et la patte de fixation 10 est venue de moulage avec la première pièce 4.

L'attache 12 est distincte de la deuxième pièce 6. L'attache 12 est rapportée sur la deuxième pièce 6 et encliquetée dans une fenêtre 14 ménagée de la deuxième pièce 6.

La patte de fixation 10 et l'attache 12 sont de préférence configurées pour une fixation amovible l'une sur l'autre. Ainsi, le dispositif de fixation par encliquetage 8 autorise la séparation de la première pièce 4 et de la deuxième pièce 6 l'une de l'autre, par exemple lors d'éventuelles opérations de maintenance ou de remplacement.

Le dispositif de fixation par encliquetage 8 est au moins en partie réutilisable. La patte de fixation 10 et l'attache 12 sont configurées de telle manière que la patte de fixation 10 est propre à être extraite de l'attache 12 sans détériorer la patte de fixation 10 et l'attache 12.

La patte de fixation 10 s'étend suivant un axe d'extension L entre une base, adjacente à la première pièce 4, et une extrémité libre, opposée à la première pièce 4. La base est connectée à la première pièce 4.

La patte de fixation 10 possède deux faces latérales 10A, 10B opposées.

Au voisinage de son extrémité libre la patte de fixation 10 possède une protubérance de verrouillage 16 faisant saillie sur une des deux faces latérales 10A, 10B, la protubérance de verrouillage 16 étant configurée pour coopérer avec l'attache 12 par encliquetage pour s'opposer à la séparation de la patte de fixation 10 et de l'attache 12.

La protubérance de verrouillage 16 confère à la patte de fixation 10 une forme de harpon ou de crochet, dont la protubérance de verrouillage 16 forme un bec de verrouillage.

La protubérance de verrouillage 16 possède une surface de verrouillage 18, tournée vers la base de la patte de fixation 10 et destinée à coopérer avec l'attache 12 pour assurer l'encliquetage et le maintien de la patte de fixation 10 dans l'attache 12.

La surface de verrouillage 18 s'étend obliquement par rapport à l'axe longitudinal L. Le terme « obliquement » signifie que la surface de verrouillage 18 n'est ni parallèle, ni perpendiculaire à l'axe d'extension L.

La surface de verrouillage 18 fait un angle α obtus avec l'axe d'extension L, du côté de la base de la patte de fixation 10. L'angle α est strictement supérieur à 90°. La surface de verrouillage 18 fait un angle compris entre 95° et 150° avec l'axe d'extension L, par exemple entre 95° et 135°. La surface de verrouillage 18 fait ici un angle d'environ 95° avec l'axe d'extension L.

La patte de fixation 10 est ici dépourvue de protubérance de verrouillage et de surface de verrouillage sur sa deuxième face latérale 10B

Comme visible sur les Figures 1 à 3, l'attache 12 s'étend suivant un axe d'extension L (qui coïncide avec celui de la patte de fixation 10 lorsque la patte de fixation 10 est insérée dans l'attache 12 comme illustré sur la Figure 1) et possède deux branches 20 conférant à l'attache 12 une forme générale en « V ».

Les deux branches 20 sont reliées entre elles par une partie de liaison 22. La partie de liaison 22 définit la pointe de la forme générale en « V ».

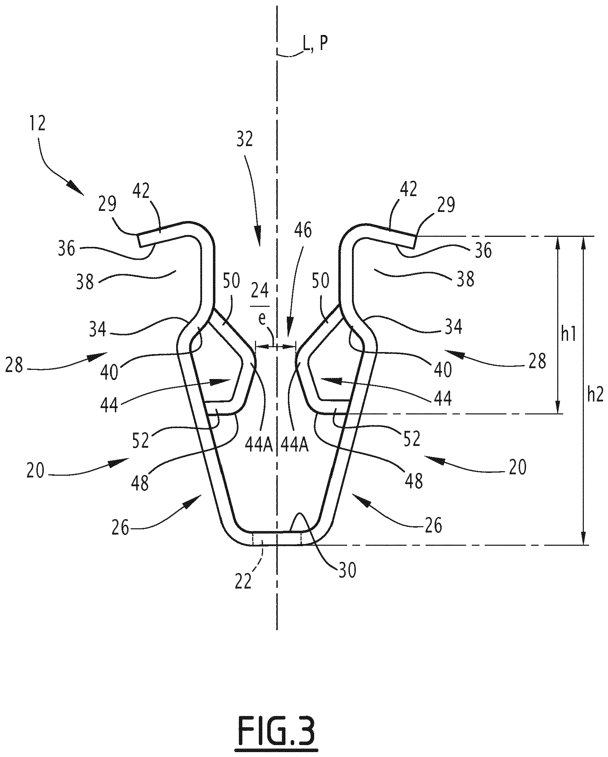

Les deux branches 20 s'étendent de part et d'autre d'un plan médian P. Le plan médian P s'étend entre les deux branches 20 et passe par l'axe d'extension L. L'attache 12 est de préférence symétrique par rapport au plan médian P passant entre les deux branches 20. Le plan médian P est perpendiculaire au plan de la Figure 3.

Les deux branches 20 définissent entre elles un espace de réception 24. Cet espace de réception 24 est prévu pour recevoir la patte de fixation 10.

Chaque branche 20 possède une portion proximale 26 adjacente à la partie de liaison 22 et une portion distale 28 éloignée de la partie de liaison 22.

Les branches 20 s'étendent à partir de la partie de liaison 22 en s'écartant progressivement l'une de l'autre.

Les portions proximales 26 des branches 20 sont rapprochées et les portions distales 28 des branches 20 sont éloignées. En d'autres termes, l'écartement entre les portions proximales 26 des branches 20 est inférieur à l'écartement entre les portions distales 28 des branches 20. L'écartement entre les branches 20 est mesuré perpendiculairement au plan médian P de l'attache 12.

Chaque branche 20 possède une extrémité distale 29. L'extrémité distale 29 de chaque branche 20 est libre. L'extrémité distale 29 de la branche 20 est aussi l'extrémité de la portion distale 28 opposée à la portion proximale 26.

Dans un exemple de réalisation, à l'état libre de l'attache 12, les branches 20 s'étendent à partir de la partie de liaison 22 en faisant entre elles un angle non nul qui est par exemple compris entre 10° et 25°, et préférentiellement compris entre 15° et 20°.

La partie de liaison 22 définit un fond 30 de l'espace de réception 24 et les portions distales 26 des branches 20 forment une entrée 32 de l'espace de réception 24, pour l'insertion de la patte de fixation 10 dans l'espace de réception 2 de l'entrée 32 vers le fond 30.

Chaque branche 20 possède une face interne 20A tournée vers l'autre branche 20 et une face externe 20B tournée à l'opposé de l'autre branche 20. La face interne 20A de chaque branche 20 est tournée vers l'intérieur, i.e. du côté de l'espace de réception 24, et la face externe 20B de chaque branche 20 est tournée vers l'extérieur, i.e. à l'opposé de l'espace de réception 24.

Dans le présent document, l'expression « face interne » d'une branche 20 désigne l'ensemble des surfaces de cette branche 20 qui sont tournées vers l'autre branche 20 et la « face externe » d'une branche 20 désigne l'ensemble des surfaces de cette branche 20 qui sont tournées à l'opposé de l'autre branche 20.

L'attache 12 est déformable élastiquement par rapprochement des portions distales 28 des branches 20, notamment pour l'insertion de l'attache 12 dans la fenêtre 14 suivant l'axe d'extension L.

Les portions distales 28 des branches 20 sont configurées pour l'encliquetage de l'attache 12 sur un bord de la fenêtre 14 dans laquelle l'attache 12 est destinée à être insérée.

Chaque portion distale 28 est munie de surfaces d'appui prévues pour venir en appui contre le bord de la fenêtre 14 pour s'opposer à déplacement de l'attache 12 par rapport au bord de la fenêtre 14 suivant l'axe d'extension L.

Plus particulièrement, la portion distale 28 de chaque branche 20 présente, sur la face externe 20B de la branche 20, une première surface d'appui 34 orientée de manière à s'opposer à l'extraction de l'attache 12 hors de la fenêtre 14, et une deuxième surface d'appui 36 est orientée de manière à empêcher l'attache 12 d'être enfoncée plus avant dans la fenêtre 14.

Chaque portion distale 28 délimite, sur la face externe 20B de la branche 20, un logement 38 de réception du bord de la fenêtre 14. Le logement 38 est délimité entre la première surface d'appui 34 et la deuxième surface d'appui 36.

Lorsque l'attache 12 est encliquetée dans la fenêtre 14, le bord de la fenêtre 14 est reçu dans le logement 38, la portion distale 28 étant à cheval sur le bord de la fenêtre 14.

Lorsque l'attache 12 est encliquetée dans la fenêtre 14, une portion du contour du bord délimitant la fenêtre 14 est reçue dans le logement 38, entre la première surface d'appui 34 et la deuxième surface d'appui 36.

La distance entre la première surface d'appui 34 et la deuxième surface d'appui 36, prise suivant l'axe d'extension L, est sensiblement égale à l'épaisseur du bord de la fenêtre 14 dans laquelle l'attache 12 est destinée à être encliquetée.

La portion distale 28 de chaque branche 20 possède, sur la face externe 20B de la branche 20, en se déplaçant vers l'extrémité libre de la branche 20, un retour 40 revenant vers l'intérieur de l'attache 12 puis un rebord 42 repartant vers l'extérieur de l'attache 12.

La première surface d'appui 34 est définie sur le retour 40 et la deuxième surface d'appui 36 est définie sur le rebord 42.

L'attache 12 est par exemple formée par pliage d'une pièce métallique. Dans ce cas, le retour 40 et le rebord 42 sont formés par pliage de la branche 20 et séparés l'un de l'autre par un ou plusieurs plis.

A l'état libre de l'attache 12, l'écartement entre les branches 20 au niveau des premières surfaces d'appui 36 est supérieur à la largeur de la fenêtre 14.

Lors de l'insertion de l'attache 12 dans la fenêtre 14, l'attache 12 se déforme élastiquement de sorte que les branches 20 se rapprochent l'une de l'autre pour permettre aux portions des branches 20 portant les premières surfaces d'appui 34 (ici les retours 40) de passer à travers la fenêtre 14, et, une fois que les premières surfaces d'appui 34 ont franchi les bords de la fenêtre 14, l'attache 12 se détend élastiquement, de sorte que chaque branche 20 vient en prise avec le bord de la fenêtre 14, par l'intermédiaire de sa première surface d'appui 34 et de sa deuxième surface d'appui 36. L'attache 12 est ainsi encliquetée dans la fenêtre 14.

L'extrémité distale 29 de chaque branche 20 définit ici l'extrémité libre du rebord 42 de cette branche 20.

Chaque branche 20 porte une languette 44. Les languettes 44 sont prévues pour l'encliquetage de la patte de fixation 10 dans l'attache 12. Lors de l'insertion de la patte de fixation 10, cette dernière s'insère entre les languettes 44.

Chaque languette 44 fait saillie de la face interne 20A de la branche 20 portant cette languette 44. Chaque languette 44 fait saillie à l'intérieur de l'espace de réception 24.

Les languettes 44 définissent entre elle un étranglement 46 à l'intérieur de l'espace de réception 24. L'étranglement 46 est plus étroit qu'une zone d'entrée de l'espace de réception 24 située entre l'étranglement 46 et l'entrée 32 et plus étroit qu'une zone de fond de l'espace de réception 24 située entre l'étranglement 46 et le fond 30. La largeur de l'espace de réception 24 est prise perpendiculairement au plan médian P.

Chaque languette 44 possède une portion d'étranglement 44A (Figure 3) définissant l'étranglement 46 avec la portion d'étranglement 44A de l'autre languette 44.

L'étranglement 46 est situé à l'intérieur de l'espace de réception 24 de manière que la patte de fixation 10 passe l'étranglement 46 en force lorsque la patte de fixation 10 est insérée dans l'attache 12.

Avantageusement, chaque languette 44 possède une surface de contact 48 convexe et de forme arrondie prévue pour venir en contact avec la surface de verrouillage 18 de la patte de fixation 10 dans l'étranglement 46 entre les deux languettes 44.

La surface de contact 48 de chaque languette 44 est plus proche de la partie de liaison 22 que l'étranglement 46. En d'autres termes, la surface de contact 48 est située entre l'étranglement 46 et la partie de liaison 22.

La surface de contact 48 convexe et de forme arrondie permet d'assurer un contact linéique entre la languette 44 et la surface de verrouillage 18.

Chaque languette 44 s'étend le long de la branche 20 portant cette languette 44. Chaque languette 44 possède une première extrémité 50 et une deuxième extrémité 52 espacée l'une de l'autre, la deuxième extrémité 52 étant plus proche de la partie de liaison 22 que la première extrémité 50. La surface de contact 48 se situe entre l'étrangement 46 et la deuxième extrémité 52.

Chaque languette 44 s'étend par exemple en porte-à-faux à partir de la branche 20 qui porte cette languette 44.

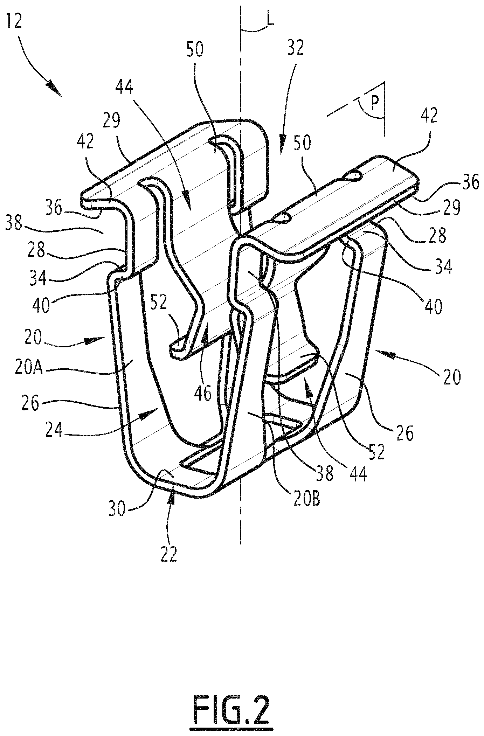

Dans l'exemple illustré sur les Figures 2 et 3, chaque languette 44 s'étend en porte-à-faux à partir de la portion distale 28 de la branche 20 portant cette languette 44, de la portion distale 28 de la branche 20 vers la partie de liaison 22, en se rapprochant de l'autre languette 44 jusqu'à l'étranglement 46, puis en s'écartant de l'autre languette 44 à partir de l'étranglement 46. La première extrémité 50 est liée à la portion distale 28 et la deuxième extrémité 52 est libre.

Dans une variante, chaque languette 44 s'étend en porte-à-faux à partir de la portion proximale 26 de la branche 20 portant cette languette 44, de la portion proximale 26 de la branche 20 vers l'entrée 32 de l'espace de réception 26, en se rapprochant de l'autre languette 44 jusqu'à l'étranglement 46, puis en s'écartant de l'autre languette 44 à partir de l'étranglement 46. La première extrémité 50 est libre et la deuxième extrémité 52 est liée à la portion proximale 26.

Dans une autre variante, chaque languette 44 est liée à ses deux extrémités à la branche 20 portant cette languette 44. La languette 44 présente la forme d'un pontet ménagé dans la branche 20 portant cette languette 44. La première extrémité 50 est liée à la portion distale 28 et la deuxième extrémité 52 est liée à la portion proximale 26.

Lors de l'insertion de la patte de fixation 10 dans l'attache 12, la patte de fixation 10 s'insère entre les deux languettes 44 et les déformant élastiquement vers l'extérieur pour permettre le passage de la patte de fixation 10, et plus particulièrement de la protubérance de verrouillage 16.

Lorsque la protubérance de verrouillage 16 passe l'étrangement 46, au moins la languette 44 située du côté de la saillie de verrouillage 18 (languette 44 située à droite sur la Figure 1) se détend élastiquement et sa surface de contact 48 vient en contact avec la surface de verrouillage 18 (Figure 3). La languette 44 et la surface de verrouillage 18 coopèrent pour s'opposer à l'extraction de la patte de verrouillage 10 hors de l'attache 12.

La languette 44 située de l'autre côté de la patte de fixation 10 (languette 44 située à gauche sur la Figure 1) vient en appui sur la patte de fixation 10, par sa zone d'étranglement 44A. Cette languette 44 reste déformée élastiquement et exerce sur la patte de fixation 10 une poussée transversale permanente en direction de l'autre languette 44. La poussée est dirigée sensiblement perpendiculairement au plan médian P. Cette poussée tend à maintenir la protubérance de verrouillage 16 en prise avec cette autre languette 44. En outre, cette sollicitation élastique transversale permet d'assurer un positionnement précis et fiable de la première pièce 4 par rapport à la deuxième pièce 6, notamment suivant une direction transversale perpendiculaire au plan médian P.

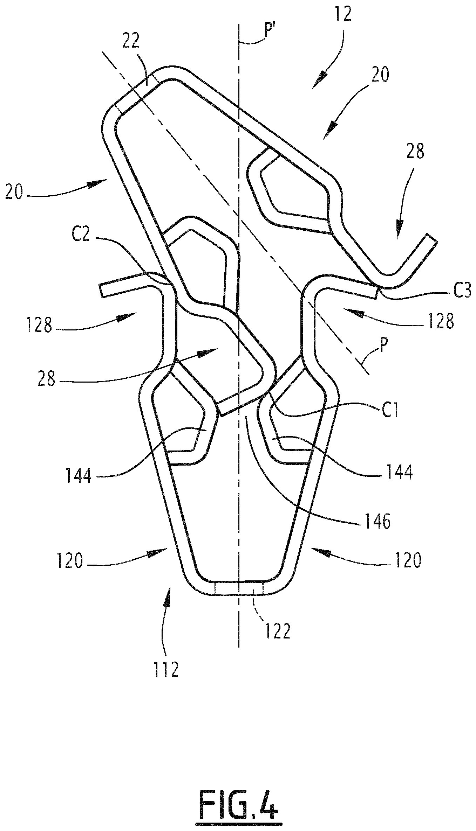

La Figure 4 illustre l'attache 12 des Figures 1 à 3 et une autre attache 112 identique pour laquelle les références numériques ou alphabétiques ont été conservées en ajoutant le nombre 100 aux références numériques et un apostrophe (« ' ») aux références alphabétiques, pour des raisons de clarté.

Comme illustré sur la Figure 4, l'attache 12 est prévue pour que lorsque l'attache 12 est retournée par rapport à une autre attache 112 identique et inclinée par rapport à cette autre attache 112 de sorte que leur plan médians P, P' définissent un angle non nul entre eux, une branche 20 de l'attache 12 étant insérée entre les branches 120 de ladite autre attache 12 avec sa portion distale 28 en contact avec au moins une des deux languettes 144 des branches 120 de ladite autre attache 112 et avec sa face externe 20B en contact contre une face interne 120A d'une branche 120 de ladite autre attache 112, alors la portion distale 28 de l'autre branche 20 de l'attache 12 est sensiblement en contact avec la portion distale 128 de l'autre branche 120 de ladite autre attache 112.

Par « sensiblement en contact », on entend ici que la distance entre la portion distale 28 de ladite autre branche 20 de l'attache 12 et la portion distale 128 de ladite autre branche 120 de ladite autre attache 112 est inférieure à 1,0 mm, et préférentiellement inférieure à 0,6 mm.

Dans un mode de réalisation préféré, dans la configuration indiquée ci-dessus, la portion distale 28 de ladite autre branche 20 de l'attache 12 est en contact avec la portion distale 128 de ladite autre branche 120 de ladite autre attache 112.

Par ailleurs, toujours dans un mode de réalisation préféré, dans la configuration indiquée ci-dessus, la portion distale 28 de la branche 20 de l'attache 12 est en contact avec la languette 144 portée par ladite autre branche 120 de l'autre attache 112.

Par ailleurs, toujours dans un mode de réalisation préféré, dans la configuration indiquée ci-dessus, le contact de la portion distale 28 de la branche 20 de l'attache 12 avec la ou chaque languette 144 de l'autre attache 112 est réalisé en amont de l'étranglement 146 défini entre les languettes 144 de l'autre attache 112, c'est-à-dire entre l'étranglement 146 et la première extrémité 150 de la ou chaque languette 144 de l'autre attache 112.

Ainsi, dans la configuration de la Figure 4, les attaches 112 présentent trois points de contact, à savoir un premier point de contact C1 entre la portion distale 28 de la branche 20 de l'attache 12 insérée à l'intérieur de l'autre attache 112 et une ou chacune des languettes 144 de cette autre attache 112, un deuxième point de contact C2 entre la face externe 20B de ladite branche 20 de l'attache 12 et une face interne 120A d'une branche de l'autre attache 112, et un troisième point de contact C3 (ou de quasi contact) entre les portions distales 28, 128 des autres branches 20, 120 de l'attache 12 et de l'autre attache 112.

De préférence, et comme illustré sur la Figure 4, le premier point de contact C1 est réalisé entre la portion distale 28 de la branche 20 de l'attache 12 insérée à l'intérieur de l'autre attache 112 et la languette 144 portée par l'autre branche 120 de ladite autre attache 112, entre la première extrémité 50 de cette languette 144 et l'étranglement 146 défini entre les languettes 144 de l'autre attache 112.

Deux attaches 12, 112 peuvent se retrouver dans une configuration telle qu'illustrée sur la Figure 4 lorsque les deux attaches 12, 112 sont reçues en vrac dans un contenant avec une multitude d'autres attaches identiques.

Dans la configuration des attaches 12, 112 illustrée sur la Figure 4, le risque est que la portion distale 28 de la branche 20 de l'attache 12 qui est insérée dans l'autre attache 112 s'engagent dans l'étranglement 146 de l'autre attache 112, auquel cas les deux attaches 12, 112 se retrouvent entremêlées.

Leur séparation peut s'avérer difficile, et un opérateur travaillant sur une chaîne de montage, devant donc assurer une cadence d'assemblage déterminée, et saisissant ces attaches 12, 112 emmêlées peut préférer mettre ces attaches 12, 112 au rebus plutôt que de prendre le temps nécessaire pour les séparer.

Du fait de la conception des attaches 12, 112, dans une configuration telle qu'illustrée sur la Figure 4, les portions distales 28, 128 desdites autres branches 20, 120 sont en contact ou viennent en contact dès que la portion distale 28 de ladite branche 20 de l'attache 12 commence à s'enfoncer dans l'étranglement 146 de l'autre attache 112.

Ceci crée un point de contact C3 et un effort de résistance supplémentaires s'opposant à l'enfoncement de la portion d'extrémité distale 28 de ladite branche 20 de l'attache 12 entre les languettes 144 de l'autre attache 112.

Le risque que les deux attaches 12, 112 s'entremêlent est donc diminué. Il en résulte que l'utilisation des attaches 12, 112 par un opérateur est facilitée.

La conception de l'attache 12 pour coopérer de la manière indiquée ci-dessus avec une autre attache 112 identique est obtenue par exemple avec un dimensionnement approprié de l'attache 12.

Elle est obtenue en particulier avec une ou plusieurs des dimensions suivantes, prises individuellement ou en combinaison :
- la largeur e de l'étranglement 46, prise perpendiculairement au plan médian P, est comprise entre 1,2 mm et 2,0 mm ;
- la distance h1 entre la deuxième extrémité 52 de chaque languette 44 et l'extrémité distale 29 de la branche 20, prise dans un plan parallèle au plan médian P, est comprise entre 4,5 mm et 5,5 mm ;
- la distance h2 entre la partie de liaison 22 et l'extrémité distale 29 de chaque branche 20, prise dans un plan parallèle au plan médian P, est comprise entre 7 mm et 11 mm.

Ces dimensions déterminent les points de contact qui apparaîtront entre les deux attaches 12, 112 retournées et inclinées l'une par rapport à l'autre, et la facilité avec laquelle les deux attaches 12, 112 peuvent s'entremêler.

L'attache 12 est formée en métal ou en matière plastique. De préférence, L'attache 12 est formée d'une seule pièce de matière.

Dans un mode de réalisation, l'attache 12 est formée d'une seule pièce de matière à partir d'une feuille métallique découpée, emboutie et/ou pliée pour former les branches 20, le retour 40, le rebord 42 et/ou les languettes 44.

Dans un tel mode de réalisation, chaque languette 44 est par exemple découpée dans la branche 20 correspondante et pliée.

Dans un mode de réalisation alternatif, le deuxième organe d'encliquetage 12 est formé en une seule pièce de matière par moulage, par exemple en une seule pièce de matière plastique.

## Revendications

1. Attache (12) possédant deux branches (20) divergeant l'une de l'autre en conférant à l'attache une forme générale en « V » et en délimitant entre elles un espace de réception (24), les deux branches (20) s'étendant de part et d'autre d'un plan médian (P), chaque branche (20) ayant une portion proximale (26) liée à l'autre branche par une partie de liaison (22) et une portion distale (28) libre, chaque branche (20) possédant une face interne (20A) et une face externe (20B), chaque branche (20) portant une languette (44) faisant saille d'une face interne (20A) de cette branche (20), les languettes (44) des deux branches (20) définissant entre elles un étranglement (46) à l'intérieur de l'espace de réception (24),
l'attache étant **caractérisée en ce que** lorsque l'attache est retournée par rapport à une autre attache (112) identique, leurs plans médians (P, P') respectifs faisant un angle non-nul entre eux, une branche (20) de l'attache étant insérée entre les branches (120) de ladite autre attache (112) avec sa portion distale (28) en contact avec au moins une des deux languettes (144) de ladite autre attache (112), et avec sa face externe (20B) en contact avec une face interne (120A) d'une branche (120) de ladite autre attache (112), la portion distale (28) de l'autre branche (20) de l'attache est sensiblement en contact avec la portion distale (128) de l'autre branche (20) de ladite autre attache (112).

2. Attache selon la revendication 1, dans laquelle la portion distale (28) de chaque branche (20) est munie, sur la face externe (20B) de cette branche (20), de surfaces d'appui (34, 36) en regard l'une de l'autre, délimitant un logement (38) de réception d'un bord d'une fenêtre dans laquelle est encliquetée l'attache.

3. Attache selon la revendication 2, dans laquelle la portion distale de chaque branche (20) présente un rebord (42) externe portant une des surfaces d'appui (34, 36).

4. Attache selon la revendication 2 ou la revendication 3, dans laquelle la portion distale de chaque branche présente un retour (40) vers l'intérieur délimitant une des surface d'appui (34, 36).

5. Attache selon l'une quelconque des revendications précédentes, dans laquelle chaque languette (44) s'étend en porte à faux à partir de la portion distale(28) de la branche (20) portant cette languette (44) et vers la portion proximale (26) de la branche (20).

6. Attache selon l'une quelconque des revendications précédentes, dans laquelle chaque languette (44) possède une portion d'étranglement (44A) définissant l'étranglement (46) avec la portion d'étranglement (44A) correspondante de l'autre languette (44), la portion d'étranglement (44A) d'au moins une languette (44) étant prévue pour venir en appui d'un côté d'une patte de fixation (10) insérée entre les deux languettes (44).

7. Attache selon l'une quelconque des revendications précédentes, dans laquelle chaque languette possède une surface de contact (48) tournée vers la partie de liaison (22) reliant les branches (20) entre elles.

8. Attache selon la revendication 7, dans laquelle au moins une portion de la surface de contact (48) est convexe et possède une forme arrondie.

9. Attache selon l'une quelconque des revendications précédentes, dans laquelle la largeur de l'étranglement (46), prise perpendiculairement au plan médian (P), est comprise entre 1,2 mm et 2,0 mm.

10. Attache selon l'une quelconque des revendications précédentes, dans laquelle chaque languette (44) possède une première extrémité (50) et une deuxième extrémité (52) plus proche de ladite partie de liaison (22) que la première extrémité (50), et dans laquelle la distance entre ladite deuxième extrémité (52) et une extrémité distale (29) de la branche (20), prise dans un plan parallèle au plan médian (P), est comprise entre 4,5 mm et 5,5 mm.

11. Attache selon l'une quelconque des revendications précédentes, dans laquelle la distance entre ladite partie de liaison (22) et une extrémité distale (29) de chaque branche (20), prise dans un plan parallèle au plan médian (P), est comprise entre 7 mm et 11 mm.

12. Ensemble de fixation, comprenant une attache selon l'une quelconque des revendications précédentes, une première pièce (4) comprenant une patte de fixation configurée pour s'insérer dans l'attache en s'encliquetant entre les languettes (44) et une deuxième pièce (6) possédant une fenêtre (14) adaptée pour l'encliquetage de l'attache (12) sur un bord de la fenêtre (14) par l'intermédiaire de ses branches (20).

## Patentansprüche

1. Befestigungsmittel (12), das zwei Abzweigungen (20) aufweist, die voneinander divergieren, wodurch das Befestigungsmittel eine allgemeine "V"-Form bekommt und zwischen ihnen einen Aufnahmeraum (24) begrenzt, wobei sich die zwei Abzweigungen (20) auf beiden Seiten einer Mittelebene (P) erstrecken, wobei jede Abzweigung (20) einen proximalen Abschnitt (26), der durch einen Verbindungsteil (22) mit der anderen Abzweigung verbunden ist, und einen freien distalen Abschnitt (28) aufweist, wobei jede Abzweigung (20) eine Innenfläche (20A) und eine Außenfläche (20B) aufweist, wobei jede Abzweigung (20) eine Feder (44) trägt, die von einer Innenfläche (20A) dieser Abzweigung (20) vorsteht, wobei die Federn (44) der zwei Abzweigungen (20) zwischen ihnen eine Verengung (46) in dem Aufnahmeraum (24) definieren,
wobei das Befestigungsmittel **dadurch gekennzeichnet ist, dass,** wenn die Fixierung relativ zu einem anderen identischen Befestigungsmittel (112) gedreht wird, wobei ihre jeweiligen Mittelebenen (P, P') zwischen ihnen einen Winkel ungleich null bilden, wobei eine Abzweigung (20) des Befestigungsmittels zwischen die Abzweigungen (120) des anderen Befestigungsmittels (112) eingeführt ist, wobei der distale Abschnitt (28) dieser Abzweigung mit mindestens einer der zwei Federn (144) des anderen Befestigungsmittels (112) in Kontakt steht, und wobei die Außenfläche (20B) dieser Abzweigung mit einer Innenfläche (120A) einer Abzweigung (120) des anderen Befestigungsmittels (112) in Kontakt steht, der distale Abschnitt (28) der anderen Abzweigung (20) des Befestigungsmittels im Wesentlichen mit dem distalen Abschnitt (128) der anderen Abzweigung (20) des anderen Befestigungsmittels (112) in Kontakt steht.

2. Befestigungsmittel nach Anspruch 1, wobei der distale Abschnitt (28) jeder Abzweigung (20), an der Außenoberfläche (20B) dieser Abzweigung (20), mit Stützoberflächen (34, 36) versehen ist, die einander zugewandt sind und ein Gehäuse (38) zum Aufnehmen einer Kante eines Fensters begrenzen, in der der Clip eine Schnappverbindung bildet.

3. Befestigungsmittel nach Anspruch 2, wobei der distale Abschnitt jeder Abzweigung (20) eine Außenkante (42) aufweist, die eine der Stützoberflächen (34, 36) trägt.

4. Befestigungsmittel nach Anspruch 2 oder 3, wobei der distale Abschnitt jeder Abzweigung eine Rückführung (40) nach innen aufweist, die eine der Stützoberflächen (34, 36) begrenzt.

5. Befestigungsmittel nach einem der vorstehenden Ansprüche, wobei sich jede Feder (44) in einem Ausleger von dem distalen Abschnitt (28) der Abzweigung (20), die diese Feder (44) trägt, und zu dem proximalen Abschnitt (26) der Abzweigung (20) hin erstreckt.

6. Befestigungsmittel nach einem der vorstehenden Ansprüche, wobei jede Feder (44) einen Verengungsabschnitt (44A) aufweist, der die Verengung (46) zusammen mit dem entsprechenden Verengungsabschnitt (44A) der anderen Feder (44) definiert, wobei der Verengungsabschnitt (44A) mindestens einer Feder (44) bereitgestellt ist, um an einer Seite einer Fixierungslasche (10) anzuliegen, die zwischen die zwei Federn (44) eingeführt ist.

7. Befestigungsmittel nach einem der vorstehenden Ansprüche, wobei jede Feder eine Kontaktoberfläche (48) aufweist, die dem Verbindungsteil (22) zugewandt ist, das die Abzweigungen (20) miteinander verbindet.

8. Befestigungsmittel nach Anspruch 7, wobei mindestens ein Abschnitt der Kontaktoberfläche (48) konvex ist und eine abgerundete Form aufweist.

9. Befestigungsmittel nach einem der vorstehenden Ansprüche, wobei die Breite der Verengung (46), wenn sie senkrecht zu der Mittelebene (P) betrachtet wird, zwischen 1,2 mm und 2,0 mm ist.

10. Befestigungsmittel nach einem der vorstehenden Ansprüche, wobei jede Feder (44) ein erstes Ende (50) und ein zweites Ende (52) aufweist, das näher an dem Verbindungsteil (22) als das erste Ende (50) ist, und wobei der Abstand zwischen dem zweiten Ende (52) und einem distalen Ende (29) der Abzweigung (20), wenn er in einer Ebene parallel zu der Mittelebene (P) betrachtet wird, zwischen 4,5 mm und 5,5 mm ist.

11. Befestigungsmittel nach einem der vorstehenden Ansprüche, wobei der Abstand zwischen dem Verbindungsteil (22) und einem distalen Ende (29) jeder Abzweigung (20), wenn er in einer Ebene parallel zu der Mittelebene (P) betrachtet wird, zwischen 7 mm und 11 mm ist.

12. Fixierungsanordnung, umfassend ein Befestigungsmittel nach einem der vorstehenden Ansprüche, einen ersten Teil (4), umfassend eine Fixierungslasche, die konfiguriert ist, um durch eine Schnappverbindung zwischen den Federn (44) in das Befestigungsmittel eingeführt zu werden, und einen zweiten Teil (6), der ein Fenster (14) aufweist, das zum Bilden einer Schnappverbindung des Clips (12) an einer Kante des Fensters (14) über seine Abzweigungen (20) angepasst ist.

## Claims

1. Fastener (12) having two branches (20) which diverge from one another, giving the fastener a general "V" shape and delimiting, between them, a receiving space (24), the two branches (20) extending on either side of a median plane (P), each branch (20) having a proximal portion (26), which is connected to the other branch by a connecting part (22), and a free distal portion (28), each branch (20) having an internal face (20A) and an external face (20B), each branch (20) carrying a tongue (44) which projects from an internal face (20A) of this branch (20), the tongues (44) of the two branches (20) defining, between them, a constriction (46) inside the receiving space (24),
the fastener being **characterized in that,** when the attachment is turned relative to another identical fastener (112), their respective median planes (P, P') making a non-zero angle between them, a branch (20) of the fastener being inserted between the branches (120) of the other fastener (112) with the distal portion (28) of this branch in contact with at least one of the two tongues (144) of the other fastener (112) and with the external face (20B) of this branch in contact with an internal face (120A) of a branch (120) of the other fastener (112), the distal portion (28) of the other branch (20) of the fastener is substantially in contact with the distal portion (128) of the other branch (20) of the other fastener (112).

2. Fastener according to claim 1, wherein the distal portion (28) of each branch (20) is provided, on the external face (20B) of this branch (20), with support surfaces (34, 36) which face one another and delimit a housing (38) for receiving an edge of a window in which the clip is snap-fitted.

3. Fastener according to claim 2, wherein the distal portion of each branch (20) has an external edge (42) which carries one of the support surfaces (34, 36).

4. Fastener according to either claim 2 or claim 3, wherein the distal portion of each branch has a return (40) towards the inside, which delimits one of the support surfaces (34, 36).

5. Fastener according to any of the preceding claims, wherein each tongue (44) extends in a cantilever from the distal portion (28) of the branch (20) which carries this tongue (44) and toward the proximal portion (26) of the branch (20).

6. Fastener according to any of the preceding claims, wherein each tongue (44) has a constriction portion (44A) which defines the constriction (46) together with the corresponding constriction portion (44A) of the other tongue (44), the constriction portion (44A) of at least one tongue (44) being provided to bear against one side of an attachment tab (10) which is inserted between the two tongues (44).

7. Fastener according to any of the preceding claims, wherein each tongue has a contact surface (48) which faces the connecting part (22) which connects the branches (20) together.

8. Fastener according to claim 7, wherein at least a portion of the contact surface (48) is convex and has a rounded shape.

9. Fastener according to any of the preceding claims, wherein the width of the constriction (46), when considered perpendicularly to the median plane (P), is between 1.2 mm and 2.0 mm.

10. Fastener according to any of the preceding claims, wherein each tongue (44) has a first end (50) and a second end (52) which is closer to the connecting part (22) than the first end (50), and wherein the distance between the second end (52) and a distal end (29) of the branch (20), when considered in a plane parallel to the median plane (P), is between 4.5 mm and 5.5 mm.

11. Fastener according to any of the preceding claims, wherein the distance between the connecting part (22) and a distal end (29) of each branch (20), when considered in a plane parallel to the median plane (P), is between 7 mm and 11 mm.

12. Attachment assembly, comprising a fastener according to any of the preceding claims, a first part (4) comprising an attachment tab, which is configured to be inserted into the fastener by means of snap-fitting between the tongues (44), and a second part (6), which has a window (14) which is adapted for snap-fitting the clip (12) to an edge of the window (14) via its branches (20).
